# FASCICULE DE BREVET EUROPEEN

(11) **EP 2 106 667 B1**
(45) Date de publication et mention de la délivrance du brevet: **22.06.2011**
(21) Numéro de dépôt: 07847946.6
(22) Date de dépôt: 06.12.2007
(51) Int. Cl.: H04N 9/31

(54) **PROCEDE D'AFFICHAGE D'IMAGES PAR PROJECTION, A DEUX ETAGES DE MODULATION, DONT L'UN PAR MODULATION D'OUVERTURE**
PROJEKTIONSBILDANZEIGEEINRICHTUNG MIT ZWEI MODULATIONSSTUFEN, EINSCHLIESSLICH EINER APERATUR-MODULATIONSSTUFE
PROJECTION IMAGE DISPLAY DEVICE HAVING TWO MODULATION STAGES, INCLUDING ONE APERATURE MODULATION STAGE

(30) Priorité: 07.12.2006 FR 0655382
(43) Date de publication de la demande: 07.10.2009
(73) Titulaire: Thomson Licensing, 92130 Issy-les-Moulineaux (FR)
(72) Inventeur: DRAZIC, Valter, 35830 Betton (FR); SARAYEDDINE, Khaled, 35410 Nouvoitou (FR)
(74) Mandataire: Browaeys, Jean-Philippe
(86) Numéro de dépôt international: PCT/EP2007/063478
(87) Numéro de publication internationale: WO 2008/068321

(56) Documents cités:
- EP-A- 1 398 973
- WO-A-2004/064410
- US-A- 5 083 854
- US-A- 5 583 669
- US-A1- 2003 086 265

## Description

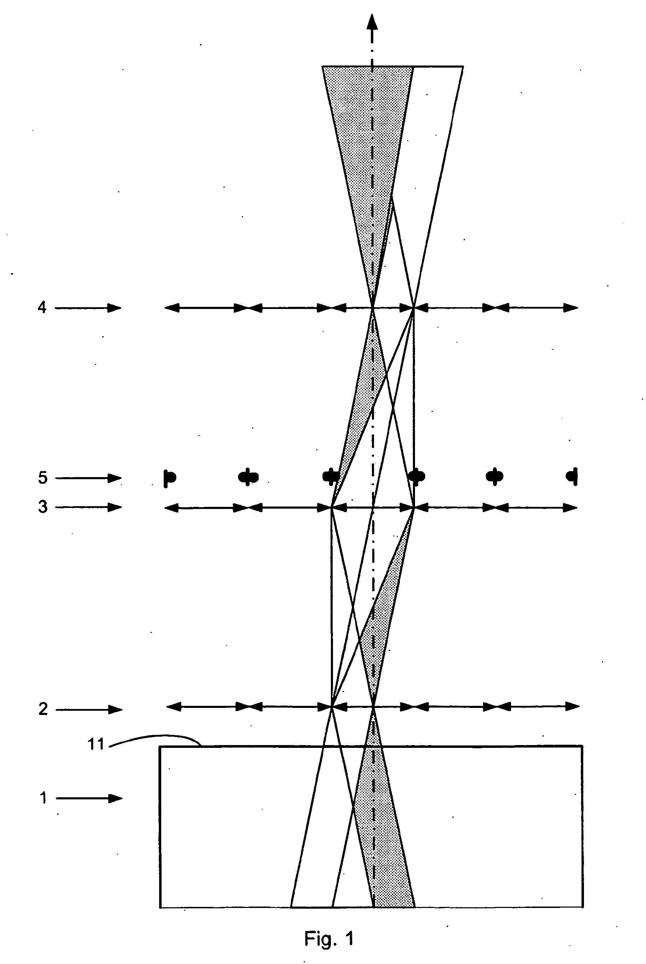

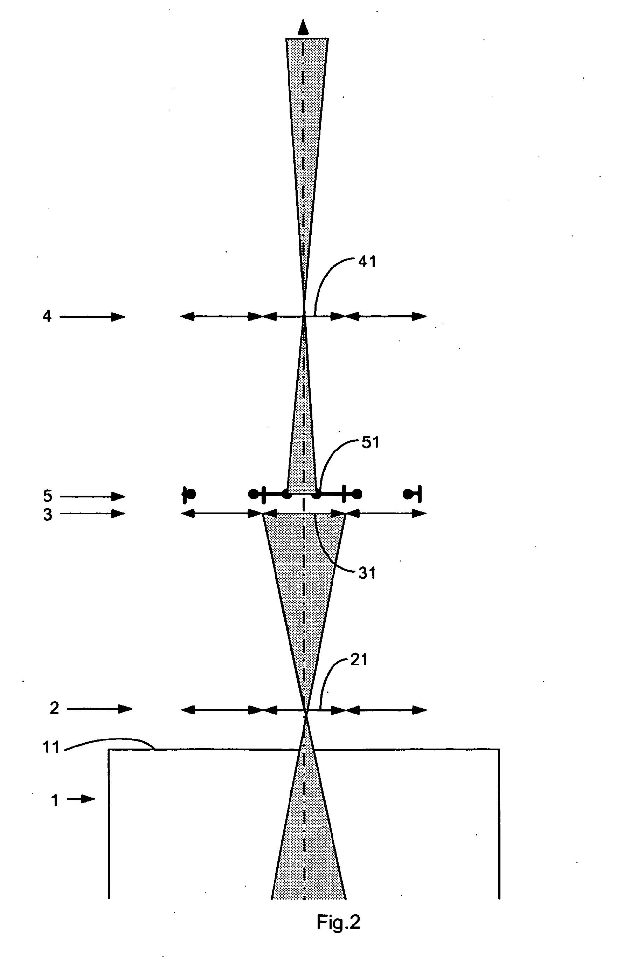

L'invention concerne un dispositif optique d'illumination modulable utilisable, notamment, dans un dispositif de projection pour affichage d'images ; les dispositifs de projection comprennent généralement un dispositif d'illumination, au moins un imageur apte à être illuminé par ce dispositif d'illumination et à générer des images à projeter, et un objectif de projection apte à projeter sur un écran les images générées par l'imageur ; selon le document US-A-5083854, le dispositif d'illumination de la surface de l'imageur comprend une source de rayonnement (réf. 20 sur la figure 1) et un dispositif optique d'illumination modulable de cet imageur. Le dispositif optique d'illumination modulable comprend ici un premier et un deuxième réseaux de microlentilles (réf. 40, 42 sur la figure 1 ; réf. 52, 56 sur la figure 2), et un réseau de modulateurs élémentaires de lumière (réf. 38 sur la figure 1 ; réf. 54 sur la figure 2) intercalé entre les deux réseaux de microlentilles ; à partir du rayonnement émis par la source, ce dispositif optique d'illumination modulable est apte à former une pluralité de sous-faisceaux d'illumination, et chaque sous-faisceau d'illumination est apte à illuminer un élément différent de surface de l'imageur. Chaque image projetée sur l'écran de projection est alors générée non seulement par la modulation spatiale apportée par l'imageur lui-même, mais également en amont par la modulation d'illumination des sous-faisceaux eux-mêmes, grâce aux modulateurs élémentaires de lumière du dispositif optique d'illumination. Comme on dispose alors de deux niveaux de modulation spatiale, en cascade, on peut alors améliorer très sensiblement le contraste d'affichage des images (HDR ou « High Dynamic Range » en langue anglaise). Les documents US-A-2003/0086265 et US-A-6947025 présentent un dispositif analogue de projection pour affichage d'images, où le premier étage de modulation, également intercalé entre deux réseaux de micro-lentilles, est formé d'un réseau de micro-volets d'obturation. Les documents précédemment cités décrivent donc un procédé d'affichage d'images à l'aide d'un imageur et de moyens pour imager cet imageur sur un écran de projection, la surface de l'imageur étant partitionnée en une pluralité d'éléments de surface, dans lequel on génère chaque image en illuminant chaque élément de surface de l'imageur selon une intensité lumineuse prédéterminée, et en modulant spatialement l'illumination de chaque élément de surface à l'aide de cet imageur.

Un but de l'invention est d'apporter une autre solution permettant d'améliorer le contraste d'affichage des images.

A cet effet, l'invention a pour objet un procédé d'illumination de la surface d'un objet comprenant une source apte à émettre un faisceau source, un premier réseau de microlentilles coupant ledit faisceau source et apte à partitionner ledit faisceau source en une pluralité de sous-faisceaux d'illumination, un deuxième et un troisième réseaux de microlentilles, où :
- ledit deuxième réseau de microlentilles est adapté pour que chacune de ses microlentilles image une microlentille du premier réseau sur une microlentille du troisième réseau, ces trois microlentilles étant ainsi associées,
- la distance entre ledit premier réseau de microlentilles et ledit deuxième réseau de microlentilles est égale à la distance focale des microlentilles du premier réseau de microlentilles,
- la distance entre ledit deuxième réseau de microlentilles et ledit troisième réseau de microlentilles est égale à la distance focale des microlentilles du troisième réseau de microlentilles,
et où ledit dispositif comprend également :
- un réseau de microdiaphragmes à ouverture modulable, chaque microdiaphragme de ce réseau étant centré sur l'axe optique d'un groupe de trois microlentilles associées et positionné à proximité de la microlentille du deuxième réseau de ce groupe,
- un système optique relais qui est disposé entre le troisième réseau de microlentilles et l'objet à illuminer et qui est apte à imager chacune des microlentilles du troisième réseau sur un élément différent de surface dudit objet.

Généralement, toutes les microlentilles du premier réseau présentent toutes la même distance focale, toutes les microlentilles du deuxième réseau présentent toutes la même distance focale, et toutes les microlentilles du troisième réseau présentent toutes la même distance focale.

De préférence, la distance focale des microlentilles du premier réseau est égale à la distance focale des microlentilles du troisième réseau ; si f est la distance focale commune aux microlentilles du premier réseau et du troisième réseau, alors la distance focale des microlentilles du deuxième réseau vaut f/2. Toutes les microlentilles sont alors de type convergent.

Les réseaux de microlentilles sont réalisés d'une manière connue en elle-même, en tenant compte du nombre de sous-faisceaux d'illumination dans la pluralité ; une même pièce, par exemple moulée ou thermoformée, peut rassembler deux réseaux successifs (un réseau à chaque extrémité), comme décrit dans le document US-A-5098184.

Chaque microlentille du premier réseau qui coupe le faisceau source définit donc un sous-faisceau d'illumination ; le premier réseau de microlentilles sert donc à échantillonner le faisceau source. Le dispositif optique d'illumination selon l'invention est donc apte à échantillonner un faisceau source.

Chaque microlentille du deuxième réseau forme, pour le groupe de microlentilles associé à cette microlentille, la pupille de ce groupe et délimite l'ouverture maximum du sous-faisceau d'illumination associée à ce groupe, si, du moins, l'ouverture n'est pas limitée par ailleurs par celle du faisceau source. Selon l'invention, un microdiaphragme est donc centré sur l'axe optique de ce groupe et positionné à proximité de la microlentille du deuxième réseau de ce groupe. Ainsi, chaque microdiaphragme est positionné approximativement sur la pupille d'entrée du groupe formé par ces trois microlentilles pour le sous-faisceau d'illumination associée à ce groupe. Comme l'ouverture de ce microdiaphragme est par ailleurs modulable, on peut ainsi faire varier l'ouverture du sous-faisceau d'illumination associée à ce groupe.

La fonction des microlentilles du troisième réseau est d'assurer la télécentricité de chaque groupe de trois microlentilles associées. Ainsi, lorsque l'objet à illuminer est un imageur, comme l'incidence des rayons moyens (« chief rays » en langue anglaise) est constante sur l'imageur, la modulation spatiale assurée par l'imageur est assurée de manière homogène sur toute la surface de l'imageur, pour chaque élément de surface de cet imageur. Si l'illumination de chaque élément de surface de l'imageur n'était pas télécentriques, et, par exemple si l'imageur était de type à valves optiques à cristaux liquides (LCD) qui, on le sait, ont des caractéristiques de modulation qui dépendent largement de l'angle d'incidence de leur illumination, on obtiendrait des fluctuations gênantes de modulation spatiale. Ainsi, grâce à la disposition des trois réseaux de microlentilles selon l'invention, quel que soit le sous-faisceau d'illumination qui est défini par la portion du faisceau source qui est coupée par une microlentille du premier réseau et qui ressort de la microlentille du troisième réseau qui lui est associée, ce sous-faisceau d'illumination est réfracté par cette microlentille du premier réseau de manière à ce que son axe principal passe par le centre de la microlentille du deuxième réseau qui est associée à cette microlentille du premier réseau.

Le réseau qui comprend un pluralité de microdiaphragmes à ouverture modulable peut être formé par un réseau de groupes de valves optiques à cristaux liquides, où chaque groupe correspond à un microdiaphragme à ouverture modulable ; au sein de chaque microdiaphragme, les valves optiques sont alors réparties en plusieurs anneaux concentriques (les anneaux sont par exemple carrés) autour d'une valve optique centrale ; lorsque seule la valve centrale est ouverte, les autres étant toutes fermées, on obtient l'ouverture minimum ; lorsque toutes les valves sont ouvertes, on obtient l'ouverture maximum ; lorsque les valves des plus petits anneaux sont ouverts alors que les valves des plus grands anneaux sont fermées, on obtient une ouverture intermédiaire.

Comme déjà mentionné précédemment, l'ouverture maximum accessible de chaque sous-faisceau d'illumination est fixée par l'ouverture du faisceau source et/ou par la taille de la microlentille du deuxième réseau que traverse ce sous-faisceau. Grâce au réseau de microdiaphragmes à ouverture modulable, l'ouverture de chaque sous-faisceau d'illumination peut être modulée séparément ; utilisé pour illuminer la surface d'un objet, le dispositif optique d'illumination permet donc d'illuminer différemment chaque élément de surface de cet objet. La surface de l'objet est partitionnée en éléments de surface. Chaque sous-faisceau d'illumination illumine un de ces éléments de surface ; de préférence, aucun élément de surface n'est illuminé simultanément par plus d'un sous-faisceau d'illumination. De préférence, à chaque sous-faisceau d'illumination correspond un élément de surface de l'objet à illuminer.

Le système optique relais image donc chacune des microlentilles du troisième réseau sur un élément différent de surface de l'objet à illuminer. Comme par ailleurs, chaque microlentille du premier réseau est imagée sur une microlentille du troisième réseau par une microlentille du deuxième réseau, chaque microlentille du premier réseau est donc imagée sur un élément différent de surface de l'objet à illuminer.

Le système optique relais peut être formé de lentilles et/ou de miroirs ; de tels systèmes sont connus en eux-mêmes et ne seront pas décrits ici en détail. Dans les dispositifs optique d'illumination de l'art antérieur tel que décrits dans le document US-A-5098184 (intégrateur de type « fly eye »), les images de différents éléments d'une surface source sont superposées sur la surface de l'objet à illuminer, alors que, dans le dispositif optique d'illumination selon l'invention, elles restent disjointes et sont généralement juxtaposées.

Une spécificité de l'invention provient du réseau de microdiaphragmes : comme leur ouverture est modulable, chaque microdiaphragme est apte à moduler l'ouverture d'un sous-faisceau d'illumination d'un élément de surface de l'objet, ce qui permet, globalement, de moduler spatialement l'éclairement de la surface de l'objet. Il s'agit ici d'une modulation d'ouverture des sous-faisceaux d'éclairement par opposition à une modulation de la luminance de ces sous-faisceaux, telle que décrite par exemple dans le document US-A-6947025 (voir les « shading plate ») ou dans le document US-A-5083854 où le modulateur (réf. 54 sur la figure 2), qui est placé à un point de focalisation d'un sous-faisceau, est apte à moduler l'intensité lumineuse transmise par ce sous-faisceau. Quand on utilise des valves optiques à cristaux liquides pour le réseau de microdiaphragmes, on peut en outre moduler à la fois l'ouverture et la luminance des sous-faisceau d'illumination, ce qui permet d'améliorer encore le contraste d'affichage des images avec seulement deux étages de modulation, comme cela sera décrit plus en détail ultérieurement.

De préférence, si A_{S} est l'ouverture angulaire dudit faisceau source, si L est la hauteur des microlentilles du deuxième réseau, et si f est la distance focale des microlentilles du premier réseau, alors on a la relation L/(2.f) = tang (A_{S} /2). On obtient alors une adéquation avantageuse entre l'ouverture du faisceau source et la taille des microlentilles du deuxième réseau, qui permet de moduler avec une amplitude maximum l'ouverture des sous-faisceaux d'illumination en recueillant, à ouverture maximum, le maximum de flux lumineux.

De préférence, ladite source est également apte à fournir une surface source d'émittance approximativement uniforme, qui est traversée par ledit faisceau source, et en ce que ledit premier réseau de microlentilles est disposé à proximité de ladite surface source.

De préférence, la surface source est formée par le premier réseau de microlentilles lui-même, ou par une surface située en amont très proche de ce réseau. Cette surface source peut être formée par un panneau de diodes électroluminescentes. Ainsi, en association avec le un système optique relais, chaque groupe de microlentilles image un élément de cette surface source sur un élément de surface de l'objet à illuminer.

De préférence, ladite source comprend une lampe, un intégrateur doté d'une section d'entrée et d'une section de sortie, et un système optique apte à imager ladite lampe sur la section d'entrée dudit intégrateur.

Le système optique relais image alors, au travers des trois réseaux de microlentilles, chaque élément de surface de la section de sortie de l'intégrateur, en face duquel se trouve une microlentille du premier réseau, sur un élément de surface différent de l'imageur.

La lampe est par exemple une lampe à arc, à émission polychromatique de teinte blanche.

Alternativement, on peut utiliser un intégrateur de type « fly-eye » (en langue anglaise) doté d'une lentille de champs en sortie apte à surperposer les multiples images de la source, auquel cas la surface source est dans le plan image de cet intégrateur.

La source comprend généralement un miroir apte à renvoyer une partie du flux lumineux de la lampe vers l'intégrateur : il peut s'agir par exemple d'un miroir sphérique, parabolique ou elliptique ; la source peut également comprendre également une lentille condenseur apte à focaliser (cas d'un intégrateur barreau) ou à colimater (cas d'un intégrateur dit « fly eye ») le rayonnement provenant de la source à l'entrée de l'intégrateur.

L'invention a également pour objet un dispositif de projection pour affichage d'images comprenant au moins un imageur apte à générer des images à projeter à partir de l'illumination de sa surface, un objectif de projection apte à projeter les dites images générées par l'au moins un imageur sur un écran de projection, et un dispositif d'illumination modulable selon l'invention apte à illuminer la surface dudit imageur.

L'objet illuminé par le dispositif d'illumination modulable est alors l'imageur lui-même. Cet imageur est apte à moduler spatialement l'éclairement apporté à sa surface par les différents sous-faisceaux d'illumination, de manière à former une image à projeter ; il comprend généralement un réseau bidimensionnel de modulateurs de lumière. Le dispositif de projection comprend généralement des moyens de commande de l'ouverture de chacun des microdiaphragmes du réseau de microdiaphragmes et des moyens de commande de chacun des modulateurs de l'imageur. A chaque modulateur de lumière de l'imageur, correspond généralement un pixel ou un sous-pixel de l'image à afficher. Les modulateurs de l'imageur sont par exemple des cellules à cristaux liquides ; il convient alors que les sous-faisceaux d'illumination de l'imageur soient polarisés ; la polarisation peut être obtenue au niveau du dispositif d'illumination, par exemple par un polariseur disposé immédiatement à la sortie de l'intégrateur, voire dans l'intégrateur lui-même ; il est avantageux de recycler la polarisation du rayonnement réfléchi par le polariseur, par exemple via un miroir et une lame quart d'onde, qui peuvent être disposés dans l'intégrateur lui-même, à proximité de son entrée ; d'autres systèmes de recyclage de polarisation peuvent être envisagés sans se départir de l'invention. Les modulateurs de l'imageur peuvent également être des micromiroirs (« DMD » ou Digital Micromirror Device en langue anglaise), ce qui nécessite généralement un éclairage de l'imageur sous incidence oblique ; comme le dispositif optique d'illumination modulable est télécentrique, les sous-faisceaux d'illumination frappent avantageusement tous les micromiroirs ou les cellules à cristaux liquides sous une incidence identique, ce qui améliore la qualité d'affichage des images projetées.

On obtient ainsi un dispositif de projection à deux étages de modulation, qui permet donc l'améliorer le contraste d'affichage des images ; le premier étage module l'illumination de la surface de l'imageur par adaptation de l'ouverture des sous-faisceaux d'illumination de chaque élément de surface de cet imageur, et le deuxième étage, formé par l'imageur, module spatialement l'éclairement de chaque élément de surface de cet imageur. Chaque sous-faisceau d'illumination illumine un groupe de valves de l'imageur ; aucun groupe de valves n'est illuminé simultanément par plus d'un sous-faisceau d'illumination. Il y donc une relation bijective entre les sous-faisceaux d'illumination et les groupes de valves.

De préférence, le dispositif de projection comprend une lentille apte à imager les pupilles de sortie dudit dispositif d'illumination sur la pupille d'entrée dudit objectif de projection, ce qui permet d'utiliser pleinement tout le flux de lumière renvoyée par l'au moins un imageur. L'objectif de projection est d'un type connu et ne sera pas décrit en détail.

De préférence, pour permettre l'affichage d'images en couleur, le dispositif de projection comprend des moyens de séquencement de couleur. On utilise par exemple un roue colorée dont les segments sont formés par des filtres transmettant différentes couleurs primaires nécessaires à l'affichage, généralement rouge, vert et bleu ; cette roue est placée de manière à ce que l'un de ses segments coupe le faisceau source, par exemple à l'entrée de l'intégrateur du dispositif d'illumination ; la rotation de la roue entraîne l'affichage successif d'images de différentes couleurs primaires, qui, par fusion des couleurs au niveau de l'oeil, permet l'affichage d'images en couleurs. D'autres moyens de séquencement de couleurs peuvent être utilisés sans se départir de l'invention.

Au lieu d'utiliser des moyens de séquencement de couleur, on peut également utiliser autant d'imageurs que de couleurs primaires nécessaires pour l'affichage des images en couleur ; le dispositif de projection comprend alors des moyens de séparation des couleurs aptes à séparer les sous-faisceaux d'illumination en sous-faisceaux de différents couleurs primaires et à les diriger vers les différents imageurs, et des moyens aptes à recombiner les sous-faisceaux modulés spatialement par ces imageurs et à les rediriger à l'entrée de l'objectif de projection. De tels moyens, connus de l'art antérieur, comprennent généralement des miroirs dichroïques.

L'invention a également pour objet un procédé d'affichage d'images à l'aide d'un dispositif de projection selon l'invention, dans lequel,
- à l'aide dudit dispositif optique d'illumination, on forme une pluralité de sous-faisceaux aptes à illuminer des élément différents de surface dudit imageur,
- et, on génère chaque image à projeter à la fois en modulant l'ouverture de chaque sous-faisceau d'illumination et, à l'aide de cet imageur lui-même, en modulant en outre spatialement chaque sous-faisceau d'illumination dont l'ouverture est modulée,
- et, à l'aide dudit objectif de projection, on projette les dites images générées. L'invention sera mieux comprise à la lecture de la description qui va suivre, donnée à titre d'exemple non limitatif, et en référence aux figures annexées sur lesquelles
- les figures 1 à 3 représentent un dispositif optique d'illumination d'un imageur selon un mode de réalisation de l'invention : la figure 1 est une vue générale des trois réseaux de microlentilles et du réseau de microdiaphragmes, la figure 2 illustre la modulation d'ouverture d'un sous-faisceau d'illumination, et la figure 3 donne une vue générale en perspective de l'ensemble du dispositif d'illumination.
- la figure 4 illustre un microdiaphragme du réseau de microdiaphragmes utilisé dans le dispositif d'illumination du mode de réalisation des figures 1 à 3.

Selon un mode préférentiel de réalisation de l'invention appliquée à un dispositif d'affichage d'images par projection, ce dispositif d'affichage comprend un dispositif d'illumination de la surface d'un objet apte à illuminer indépendamment les uns des autres des éléments de surface différents de cet objet, un imageur 7 apte à être illuminé par ledit dispositif d'illumination et à générer des images à projeter, un écran de projection et un objectif de projection apte à projeter les images générées par l'imageur sur cet écran.

En référence aux figures 1 à 3, le dispositif d'illumination comprend une source apte à former un faisceau source. Cette source est adaptée pour former un faisceau source. Cette source comprend de préférence au moins une lampe (non représentée), une roue colorée, et un intégrateur de type « barreau » 1. La lampe est par exemple une lampe à arc, à émission polychromatique de teinte blanche. La roue colorée est dotée de segments formés par des filtres transmettant différentes couleurs primaires : rouge, verte et bleue. Cette roue est placée de manière à ce que l'un de ses segments coupe le faisceau lumineux à l'entrée de l'intégrateur 1 ; la rotation de la roue entraîne le changement de couleur du faisceau. L'intégrateur de type « barreau » est apte à fournir, à partir du rayonnement émis par la lampe, une surface source, d'émittance approximativement uniforme, correspondant à la section de sortie 11 de cet intégrateur. La section de sortie de l'intégrateur présente une dimension homothétique de celle de la surface à illuminer de l'imageur. Comme précisé ultérieurement, le dispositif d'illumination est apte à former une pluralité de sous-faisceaux d'illumination de l'imageur 7 à partir du faisceau source fourni par la source, où chaque sous-faisceau d'illumination est apte à illuminer un élément différent de surface de l'imageur 7. En outre, la source comprend généralement un système optique apte à imager l'arc de la lampe à l'entrée de l'intégrateur, qui comprend généralement un miroir et une lentille condenseur (non représentés) qui sont disposés entre la lampe et l'intégrateur.

Selon l'invention, le dispositif optique d'illumination modulable de l'imageur comprend également un premier, un deuxième , et un troisième réseaux de microlentilles 2, 3, 4, un réseau de microdiaphragmes d'ouverture modulable 5, et un système optique relais 6 qui est disposé entre les trois réseaux de microlentilles et l'imageur 7 ; chaque microdiaphragme est centré sur l'axe optique d'un ensemble de trois microlentilles associées qui appartiennent chacune à un réseau différent de microlentilles ; chaque microdiaphragme est positionné sur cet axe approximativement à l'emplacement de la pupille d'entrée du système formé par ces trois microlentilles.

Les trois réseaux de microlentilles sont adaptés pour que :
- chaque microlentille 31 du deuxième réseau image une microlentille du premier réseau 21 sur une microlentille du troisième réseau 41 ;
- la distance entre le premier réseau de microlentilles 2 et le deuxième réseau de microlentilles 3 est égale à la distance focale des microlentilles du premier réseau de microlentilles 2,
- la distance entre le deuxième réseau de microlentilles 3 et ledit troisième réseau de microlentilles 4 est égale à la distance focale des microlentilles 41 du troisième réseau de microlentilles 4.

De ce fait, comme illustré par la figure 1, quel que soit le sous-faisceau source défini par la portion du faisceau source issu de l'intégrateur 1 qui est coupée par une microlentille 21 du premier réseau et qui ressort du dispositif optique d'illumination modulable sous la forme d'un sous-faisceau d'illumination d'un élément de surface de l'imageur, ce sous-faisceau source est réfracté par cette microlentille 21 de manière à ce que son axe principal passe par le centre de la microlentille 31 du deuxième réseau qui est associée à cette microlentille du premier réseau ; ainsi, chaque microlentille du deuxième réseau est approximativement à l'endroit de la sous-pupille du groupe de trois microlentilles associées à laquelle cette microlentille du deuxième réseau appartient.

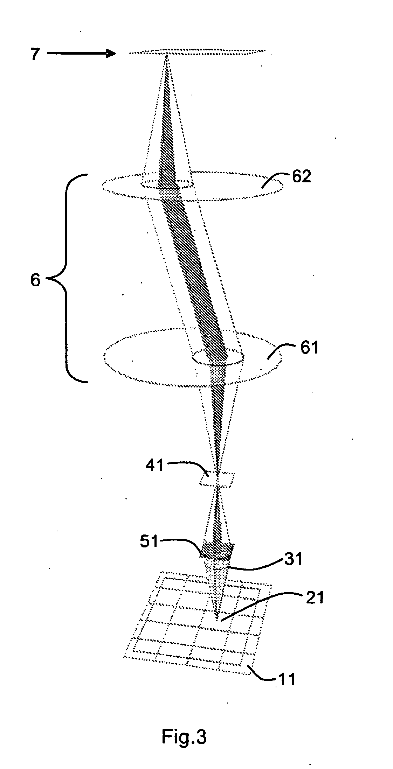

Le système optique relais 6 est adapté pour imager, au travers des trois réseaux de microlentilles, chaque élément de surface de la section de sortie de l'intégrateur 1, en face duquel se trouve une microlentille 21 du premier réseau, sur un élément de surface différent de l'imageur 7. En référence à la figure 3, ce système optique relais 6 comprend deux lentilles 61, 62 centrées sur l'axe optique principal du dispositif d'illumination. On configure par exemple les microlentilles des réseaux de microlentilles pour obtenir des sous-faisceaux source tels que F# = 2,4. L'union des différents éléments de surface de la section de sortie de l'intégrateur correspond à la surface totale de la section de sortie de l'intégrateur 1. L'union des différents éléments de surface qui sont ainsi imagés sur l'imageur 7 correspond ici à la surface totale à illuminer de cet imageur 7.

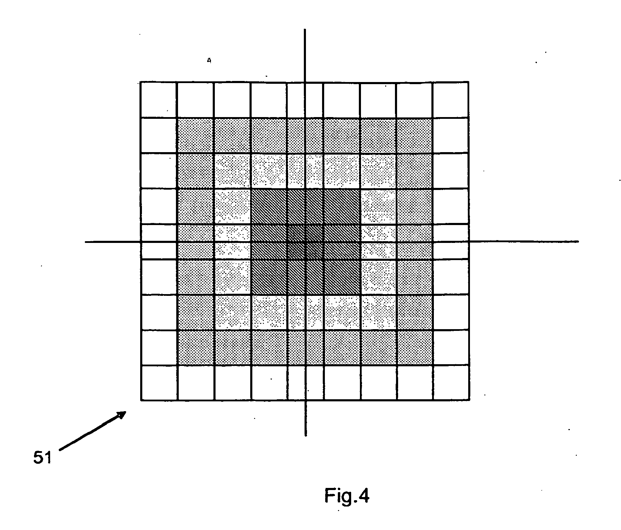

Dans le réseau de microdiaphragmes d'ouverture modulable 5, chaque microdiaphragme 51 est formé par un groupe de valves optiques à cristaux liquides ; en référence à la figure 4, au sein de chaque microdiaphragme 51, ces valves optiques sont réparties en plusieurs anneaux concentriques de forme carrée, autour d'une valve optique centrale ; chaque microdiaphragme est par exemple formé de 23x23 valves (pour simplifier la représentation, on a limité à 9x9 sur la figure 4), ce qui permet, pour F# = 2,4, une modulation d'ouverture à 8 niveaux d'ouverture : 0,74, 2,22, 3,70, 5,17, 6,64, 8,09, 9,54 et 10,97 ; un panneau classique LCD à 850x480 valves permet ainsi de former un réseau de 720 microdiaphragmes ; ce réseau est doté de moyens de commande aptes à commander l'ouverture ou la fermeture des valves d'une manière adaptée pour moduler l'ouverture des microdiaphragmes, indépendamment les uns des autres.

L'imageur 7 comprend un réseau de micromiroirs (« DMD ») et des moyens de commande de l'orientation de chacun de ces micromiroirs ; on trouve autant de micromiroirs que de pixels dans l'image à afficher ; selon son orientation, un micromiroir est dit « passant » ou « non-passant » ; un micromiroir « passant » correspond à un pixel allumé ; un micromiroir « non-passant » correspond à un pixel éteint ; chaque sous-faisceau d'illumination provenant du système optique d'illumination modulable illumine un élément de surface différent de cet imageur 7. Chaque élément de surface de l'imageur correspond donc à un groupe de micromiroirs de l'imageur, qui correspond lui-même à un groupe de pixels de l'image à afficher ; l'ensemble des sous-faisceaux illumine l'ensemble de la surface des micromiroirs de l'imageur ; cette surface est par exemple rectangulaire, de format 16/9, et de diagonale égale à 2,1 cm ; la commande de l'orientation de l'ensemble des micromiroirs permet de renvoyer vers l'objectif un faisceau global modulé ; on génère ainsi une image à projeter ; comme le dispositif optique d'illumination modulable est télécentrique du côté image, les faisceaux d'illumination frappent avantageusement tous les micromiroirs sous une incidence identique.

L'objectif de projection est d'un type connu et ne sera pas décrit ici en détail. Il est adapté pour imager la surface illuminée de l'imageur sur l'écran de projection. L'ensemble des sous-faisceaux réfléchis par l'imageur 7, qui sont chacun modulés spatialement par cet imageur en fonction de la commande des micromiroirs, est dirigé à l'entrée de l'objectif de projection, de manière à imager les pupilles de sortie du dispositif optique d'illumination modulable sur la pupille d'entrée de l'objectif de projection ; on assure ainsi une bonne compatibilité angulaire entre l'ouverture des sous-faisceaux modulés et les caractéristiques d'entrée de l'objectif.

On va maintenant décrire un mode de réalisation du procédé d'affichage d'images à l'aide d'un dispositif de projection qui vient d'être décrit.

Chaque image à afficher est disponible sous forme de signaux vidéo standardisés par exemple NTSC ou EBU, et comprend une image primaire pour chaque couleur, rouge, vert et bleu ; ces signaux vidéo sont transformés d'une manière connue en elle-même en fonction des caractéristiques spécifiques du dispositif de projection, notamment en fonction des caractéristiques spectrales de la source et des segments de la roue colorée, de manière à ce que, pour chaque pixel de chaque image primaire, on dispose d'une donnée de commande de chaque micromiroir de l'imageur : D_{R} pour une image rouge, D_{G} pour une image verte, D_{B} pour une image bleue. Chaque donnée de commande correspond généralement à une durée d'activation d'un micromiroir, de sorte que la modulation spatiale de l'imageur est de type « PWM » (« Pulse Width Modulation » en langue anglaise). D'autre part, grâce au dispositif d'illumination, l'imageur 7 est illuminé par une pluralité de sous-faisceaux, éclairant chacun un élément de surface différent de cet imageur ; selon la position de la roue colorée, ces sous-faisceaux sont de couleur rouge, verte, ou bleue. Chaque élément de surface de l'imageur correspond à un groupe de micromiroirs et à un groupe correspondant de pixels de l'image primaire de la couleur d'illumination.

Une première étape du procédé d'affichage d'image consiste à positionner la roue colorée de manière à obtenir une couleur rouge d'illumination.

Un deuxième étape du procédé consiste à évaluer, pour chaque groupe de pixels correspondant à un groupe de micromiroirs illuminés par le même sous-faisceau, la luminance minimum de l'ensemble de ces pixels, afin d'en déduire une consigne d'ouverture M_{R} du microdiaphragme 51 que ce sous-faisceau traverse, et de recalculer la donnée de commande D'_{R} de chaque micromiroir de l'imageur ; un critère du recalcul est basé sur l'équivalence entre d'une part l'affichage d'un pixel qui est obtenu avec une consigne d'ouverture maximum de ce microdiaphragme 51 et une donnée de commande D_{R} du micromiroir correspondant à ce pixel, et, d'autre part, l'affichage d'un pixel qui est obtenu avec une consigne d'ouverture M_{R} du même microdiaphragme 51 et une donnée de commande D'_{R} du même micromiroir.

Une troisième étape du procédé consiste à générer, au niveau de l'imageur, une image à projeter. A cet effet :
- on commande l'ouverture de chaque microdiaphragme du réseau de microdiaphragmes en fonction d'une consigne d'ouverture M_{R} propre au groupe de pixels et de micromiroirs qui sont illuminés par le même sous-faisceau traversant ce microdiaphragme ;
- et on adresse à chaque micromiroir sa donnée recalculée de commande D'_{R}, de manière à commander l'orientation de l'ensemble des micromiroirs, à renvoyer vers l'objectif un faisceau global modulé, et à générer une image primaire rouge à projeter.

A l'aide de l'objectif de projection, on affiche ensuite l'image primaire rouge sur l'écran de projection.

On voit donc qu'on génère chaque image à projeter à la fois en modulant l'ouverture de chaque sous-faisceau d'illumination et en modulant en outre spatialement l'illumination de l'imageur, à l'aide de cet imageur lui-même.

On réitère ensuite les différentes étapes du procédé pour la couleur primaire verte, puis pour la couleur primaire bleue.

L'affichage séquentiel des images primaires rouge, verte et bleue sur l'écran de projection aboutit, par fusion des couleurs, à l'affichage final global de l'image. On procède ainsi pour chaque image à afficher.

En répartissant ainsi la modulation à deux niveaux, celui de l'imageur 7 et celui du réseau de microdiaphragmes 5, on améliore très sensiblement le contraste d'affichage des images. Avantageusement, on peut réaliser non seulement une modulation d'ouverture, mais aussi de luminance ; on peut réaliser soit de la modulation d'ouverture seule de chaque sous-faisceau, en ouvrant totalement ou en fermant totalement des valves du microdiaphragme de ce sous-faisceau, soit aussi de la modulation de luminance de ce sous faisceau par atténuation à l'aide des mêmes valves du microdiaphragme ; avec un valve à cristaux liquide, on dispose généralement de 255 niveaux d'atténuation qui permettent de passer graduellement de la fermeture totale à l'ouverture totale ; on peut moduler l'ouverture du sous-faisceau en fermant les valves périphériques du microdiaphragme, et on peut moduler la transmission de ce microdiaphragme à l'aide de ses valves centrales ; on améliore ainsi encore le contraste d'affichage des images sans ajouter aucun autre composant au dispositif.

Selon une variante de l'invention, on remplace la source, le miroir et l'intégrateur par d'autres moyens d'obtenir une surface source d'émittance uniforme ; on peut par exemple envisager d'utiliser une plaque électroluminescente.

Selon une variante de l'invention, on utilise le panneau LCD qui forme le réseau de microdiaphragme pour moduler également l'intensité lumineuse des sous-faisceaux source.

La présente invention a été décrite en se référant à un panneau LCD pour former le réseau de microdiaphragmes ; d'autres réseaux de microdiaphragmes peuvent être utilisés sans se départir de l'invention.

La présente invention a été décrite en se référant à un procédé d'affichage séquentiel couleur ; il est évident pour l'homme du métier qu'elle peut s'appliquer à d'autres procédés d'affichage sans sortir du cadre des revendications ci-après.

## Revendications

1. Dispositif d'illumination de la surface d'un objet, comprenant une source apte à émettre un faisceau source, un premier réseau de microlentilles (2) coupant ledit faisceau source et apte à partitionner ledit faisceau source en une pluralité de sous-faisceaux d'illumination, un deuxième et un troisième réseaux de microlentilles (3, 4), **caractérisé en ce que** :
- ledit deuxième réseau de microlentilles (3) est adapté pour que chacune (31) de ses microlentilles image une microlentille (21) du premier réseau sur une microlentille (41) du troisième réseau, ces trois microlentilles (31, 21, 41) étant ainsi associées,
- la distance entre ledit premier réseau de microlentilles (2) et ledit deuxième réseau de microlentilles (3) est égale à la distance focale des microlentilles du premier réseau de microlentilles (2),
- la distance entre ledit deuxième réseau de microlentilles (3) et ledit troisième réseau de microlentilles (4) est égale à la distance focale des microlentilles du troisième réseau de microlentilles (4),
et **caractérisé en ce que** ledit dispositif comprend également :
- un réseau de microdiaphragmes à ouverture modulable (5), chaque microdiaphragme (51) de ce réseau étant centré sur l'axe optique d'un groupe de trois microlentilles associées (21, 31, 41) et positionné à proximité de la microlentille (31) du deuxième réseau de ce groupe,
- un système optique relais (6) qui est disposé entre le troisième réseau de microlentilles (4) et l'objet à illuminer et qui est apte à imager chacune des microlentilles du troisième réseau (4) sur un élément différent de surface dudit objet.

2. Dispositif d'illumination selon la revendication 1 **caractérisé en ce que**, si A_{S} est l'ouverture angulaire dudit faisceau source, si L est la hauteur des microlentilles (31) du deuxième réseau, et si f est la distance focale des microlentilles (21) du premier réseau, alors on a la relation U(2.f) = tang (A_{S} /2).

3. Dispositif d'illumination selon la revendication 1 ou 2 **caractérisé en ce que** ladite source est également apte à fournir une surface source (11) d'émittance approximativement uniforme, qui est traversée par ledit faisceau source, et **en ce que** ledit premier réseau de microlentilles (2) est disposé à proximité de ladite surface source (11).

4. Dispositif d'illumination selon la revendication 3 **caractérisé en ce que** ladite source comprend une lampe, un intégrateur (1) doté d'une section d'entrée et d'une section de sortie (11), et un système optique apte à imager ladite lampe sur la section d'entrée dudit intégrateur.

5. Dispositif de projection pour affichage d'images comprenant au moins un imageur (7) apte à générer des images à projeter à partir de l'illumination de sa surface, un objectif de projection apte à projeter les dites images générées par l'au moins un imageur (7) sur un écran de projection, et un dispositif d'illumination modulable selon l'une quelconque des revendications 1 à 4 pour illuminer la surface dudit imageur.

6. Dispositif de projection selon la revendication 5 **caractérisé en ce qu'**il comprend une lentille apte à imager les pupilles de sortie dudit dispositif d'illumination sur la pupille d'entrée dudit objectif de projection.

7. Procédé d'affichage d'images à l'aide d'un dispositif de projection selon l'une quelconque des revendications 5 à 6, dans lequel,
- à l'aide dudit dispositif optique d'illumination, on forme une pluralité de sous-faisceaux aptes à illuminer des élément différents de surface dudit imageur,
- et, on génère chaque image à projeter à la fois en modulant l'ouverture de chaque sous-faisceau d'illumination et, à l'aide de cet imageur lui-même, en modulant en outre spatialement chaque sous-faisceau d'illumination dont l'ouverture est modulée,
- et, à l'aide dudit objectif de projection, on projette les dites images générées.

## Claims

1. A device for illuminating the surface of an object, comprising a source adapted to emit a source beam, a first array of microlenses (2) intercepting said source beam and adapted to partition said source beam into a plurality of illumination sub-beams, and a second and a third array of microlenses (3, 4), **characterized in that**:
- said second array of microlenses (3) is adapted so that each (31) of its microlenses images a microlens (21) of the first array onto a microlens (41) of the third array, these three microlenses (31, 21, 41) thus being associated,
- the distance between said first array of microlenses (2) and said second array of microlenses (3) is equal to the focal length of the microlenses of the first array of microlenses (2),
- the distance between said second array of microlenses (3) and said third array of microlenses (4) is equal to the focal length of the microlenses of the third array of microlenses (4),
and **characterized in that** said device also comprises:
- an array of microdiaphragms with a modulable aperture (5), each microdiaphragm (51) of this array being centered on the optical axis of a group of three associated microlenses (21, 31, 41) and positioned in proximity to the microlens (31) of the second array of this group,
- an optical relay system (6) which is arranged between the third array of microlenses (4) and the object to be illuminated, and which is adapted to image each of the microlenses of the third array (4) onto a different surface elements of said object.

2. The illumination device as claimed in claim 1, **characterized in that**, if A_{S} is the angular aperture of said source beam and if L is the height of the microlenses (31) of the second array, and if f is the focal length of the microlenses (21) of the first array, then the relation L/(2.f) = tan (A_{S} /2) is satisfied.

3. The illumination device as claimed in claim 1 or 2, **characterized in that** said source is also adapted to provide a source surface (11) of approximately uniform emittance, through which said source beam passes, and **in that** said first array of microlenses (2) is arranged in proximity to said source surface (11).

4. The illumination device as claimed in claim 3, **characterized in that** said source comprises a lamp, an integrator (1) provided with an entry section and an exit section (11), and an optical system adapted to image said lamp onto the entry section of said integrator.

5. A projection device for displaying images, comprising at least one imager (7) adapted to generate images to be projected by using the illumination of its surface, a projection objective adapted to project said images generated by the at least one imager (7) onto a projection screen, and a modulable illumination device as claimed in any one of claims 1 to 4 for illuminating the surface of said imager.

6. The projection device as claimed in claim 5, **characterized in that** it comprises a lens adapted to image the exit pupils of said illumination device onto the entry pupil of said projection objective.

7. A method for displaying images with the aid of a projection device as claimed in any one of claims 5 to 6, in which,
- a plurality of sub-beams, which are adapted to illuminate different surface elements of said imager, are formed with the aid of said optical illumination device,
- each image to be projected is generated both by modulating the aperture of each illumination sub-beam and with the aid of this imager itself, by furthermore spatially modulating each illumination sub-beam whose aperture is modulated,
- and said generated images are projected with the aid of said projection objective.

## Patentansprüche

1. Vorrichtung zum Beleuchten der Oberfläche eines Objektes, umfassend eine Quelle, die geeignet ist, ein Quellstrahlenbündel auszusenden, ein erstes Mikrolinsengitter (2), das das Quellstrahlenbündel schneidet und geeignet ist, das Quellstrahlenbündel in eine Vielzahl von Beleuchtungsteilstrahlenbündeln zu partitionieren, ein zweites und ein drittes Mikrolinsengitter (3, 4), **dadurch gekennzeichnet, dass**:
- das zweite Mikrolinsengitter (3) geeignet ist, damit jede (31) seiner Mikrolinsen eine Mikrolinse (21) des ersten Gitters auf eine Mikrolinse (41) des dritten Gitters abbildet, wodurch diese drei Mikrolinsen (31, 21, 41) einander zugeordnet sind,
- der Abstand zwischen dem ersten Mikrolinsengitter (2) und dem zweiten Mikrolinsengitter (3) gleich dem Fokusabstand der Mikrolinsen des ersten Mikrolinsengitters (2) ist,
- der Abstand zwischen dem zweiten Mikrolinsengitter (3) und dem dritten Mikrolinsengitter (4) gleich dem Fokusabstand der Mikrolinsen des dritten Mikrolinsengitters (4) ist,
und **dadurch gekennzeichnet, dass** die Vorrichtung ebenfalls Folgendes umfasst:
- ein Gitter aus Mikroblenden mit modulierbarer Apertur (5), wobei jede Mikroblende (51) dieses Gitters auf die optische Achse einer Gruppe aus drei einander zugeordneten Mikrolinsen (21, 31, 41) zentriert ist und in der Nähe der Mikrolinse (31) des zweiten Gitters dieser Gruppe positioniert ist,
- ein optisches Relais-System (6), das zwischen dem dritten Mikrolinsengitter (4) und dem zu beleuchtenden Objekt angeordnet ist und das geeignet ist, jede der Mikrolinsen des dritten Gitters (4) auf ein unterschiedliches Oberflächenelement des Objekts abzubilden.

2. Beleuchtungsvorrichtung nach Anspruch 1, **dadurch gekennzeichnet, dass**, wenn A_{S} die Winkelöffnung des Quellstrahlenbündels ist, wenn L die Höhe der Mikrolinsen (31) des zweiten Gitters ist und wenn f der Fokusabstand der Mikrolinsen (21) des ersten Gitters ist, sich die Beziehung L/(2.f) = tang (A_{S}/2) ergibt.

3. Beleuchtungsvorrichtung nach Anspruch 1 oder 2, **dadurch gekennzeichnet, dass** die Quelle ebenfalls geeignet ist, eine Quelloberfläche (11) mit einem nahezu einheitlichen Emissionsvermögen zu liefern, die von dem Strahlenbündel durchquert wird, und dass das erste Mikrolinsengitter (2) in der Nähe der Quelloberfläche (11) angeordnet ist.

4. Beleuchtungsvorrichtung nach Anspruch 3, **dadurch gekennzeichnet, dass** die Quelle eine Lampe, einen Integrator (1) mit einem Eintrittsquerschnitt und einem Austrittsquerschnitt (11) und ein optisches System umfasst, das geeignet ist, die Lampe auf den Eintrittsquerschnitt des Integrators abzubilden.

5. Projektionsvorrichtung zum Anzeigen von Bildern, umfassend mindestens einen Bildgeber (7), der geeignet ist, ausgehend von der Beleuchtung seiner Oberfläche zu projizierende Bilder zu erzeugen, ein
Projektionsobjektiv, das geeignet ist, die von dem mindestens einen Bildgeber (7) erzeugten Bilder auf einen Projektionsschirm zu projizieren, und eine Vorrichtung für eine modulierbare Beleuchtung nach einem beliebigen der Ansprüche 1 bis 4, um die Oberfläche des Bildgebers zu beleuchten.

6. Projektionsvorrichtung nach Anspruch 5, **dadurch gekennzeichnet, dass** sie eine Linse umfasst, die geeignet ist, die Austrittspupillen der Beleuchtungsvorrichtung auf die Eintrittspupillen des Projektionsobjektivs abzubilden.

7. Verfahren zum Anzeigen von Bildern mit Hilfe einer Projektionsvorrichtung nach einem beliebigen der Ansprüche 5 bis 6, bei dem
- mit Hilfe der optischen Beleuchtungsvorrichtung eine Vielzahl von Teilstrahlenbündeln gebildet wird, welche geeignet sind, verschiedene Oberflächenelemente des Bildgebers zu beleuchten, und
- jedes zu projizierende Bild **dadurch** erzeugt wird, dass gleichzeitig die Apertur jedes Beleuchtungsteilstrahlenbündels moduliert und ferner jedes Beleuchtungsteilstrahlenbündel mit modulierter Apertur mit Hilfe des Bildgebers räumlich moduliert wird, und
- die erzeugten Bilder mit Hilfe der Projektionsvorrichtung projiziert werden.
